(19) 

Europäisches Patentamt
European Patent Office
Office européen des brevets

(11) **EP 3 713 061 A1**

(12) **EUROPEAN PATENT APPLICATION**
published in accordance with Art. 153(4) EPC

(43) Date of publication:
**23.09.2020 Bulletin 2020/39**

(21) Application number: **18826480.8**

(22) Date of filing: **13.11.2018**

(51) Int Cl.:
**H02K 19/06** *(2006.01)* **H02K 1/24** *(2006.01)*

(86) International application number:
**PCT/RU2018/050139**

(87) International publication number:
**WO 2019/093928 (16.05.2019 Gazette 2019/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.11.2017 RU 2017139256**

(71) Applicant: **Limited Liability Company "Emach" Moscow 121205 (RU)**

(72) Inventors:
• **DMITRIEVSKII, Vladimir Alexandrovich**
  **Sverdlovskaya obl. 622034 (RU)**
• **PRAKHT, Vladimir Alekseevich**
  **Sverdlovskaya obl. 622048 (RU)**

(74) Representative: **Chimini, Francesco**
**Jacobacci & Partners S.p.A.**
**Piazza della Vittoria 11**
**25122 Brescia (IT)**

(54) **SYNCHRONOUS RELUCTANCE MACHINE**

(57) The present invention relates to electrical engineering, particularly to synchronous reluctance machines, and can be used in electrical drives for machines and mechanisms, as well as in electrical power generators. The synchronous reluctance machine comprises a stator with a winding arranged within stator slots, and a rotor mounted with a gap with respect to the stator and rotatable with respect thereto, the rotor comprising radially alternating magnetically permeable layers and flux barriers. The barrier each extend between two peripheral ends extending towards the circumferential rotor surface, and wherein an angular distance $\alpha_0$ between adjacent peripheral ends of innermost barriers and an angular distance $\alpha_n$ between peripheral ends of the outer barrier, said distances expressed in electrical radians, satisfy the following inequation:

$$\frac{8}{\pi}\left( \frac{\sin^2(\alpha_n/2)}{\alpha_n} + \frac{(\sin(\alpha_n/2) - \cos(\alpha_0/2))^2}{\pi - \alpha_0 - \alpha_n} \right) > 0.95$$

The technical effect of the present invention is an increase in power factor and efficiency (including low-load operation) with low torque ripple and an increase in weight ratios (torque-weight ratio and power-weight ratio) for a given number of flux barriers.

EP 3 713 061 A1

**Description**

Field of the Invention

The present invention relates to electrical engineering, particularly to synchronous reluctance machines, and can be used in electrical drives for machines and mechanisms, as well as in electrical power generators.

Background of the Invention

Synchronous reluctance machines are machines with a magnetically inhomogeneous rotor. The main mechanism for creating torque (rotational torque) in a synchronous reluctance machine is provided by the rotor striving to re-orient itself as to provide maximum magnetic permeability to the magnetic field of the stator. Synchronous reluctance machines can be implemented without magnets in rotor structure or with magnets in the rotor.

An improvement in output and weight ratio characteristics of a synchronous reluctance machine can be provided by adding magnets to the rotor structure. The main mechanism for creating torque (rotational torque) remains identical to that of a synchronous reluctance machine without magnets in the rotor.

A synchronous reluctance machine is known from US 5,818,140. In the prior art machine comprising a stator with slots and a rotor of the transverse lamination type with an air gap separating the stator from the rotor, insulating layers open to the rotor outer circumference and peripheral ends thereof located in so-called "pitch points" on a rotor surface. The pitch points are arranged equidistant from each other. Some pitch points can be virtual (not comprising ribs). The prior art machine as disclosed in US 5818140 provides low torque ripple. However, the prior art solution fails to achieve maximum rotor anisotropy at a given number of layers for the flux, which leads to low output performance (energy conversion efficiency, power factor, torque-weight ratio).

US 8,638,012 discloses a rotor for a synchronous reluctance machine, wherein torque ripple is reduced by altering the geometry of magnetic flux barriers arranged in the rotor. Reference points arranged along the perimeter are used as an additional structure, wherein the pitch angle between adjacent reference points arranged between adjacent q-axes is identical for the entire structure. Ribs arranged on the rotor circumference are located at pitch points deviating from reference points for an angular distance of up to 2.5°. The prior art machine fails to achieve maximum rotor anisotropy, and therefore the output performance (energy conversion efficiency, power factor) is low.

The closest prior art for the present invention is a synchronous reluctance machine disclosed in US 6,239,526. The machine comprises a stator with a plurality of spaced slots and teeth and a rotor with a plurality of flux barriers, each of the flux barriers having a first rib and a second rib arranged at opposite ends thereof. The prior art publication describes a pitch point calculation algorithm, wherein when the first rib faces the center of a slot of a stator, the second rib faces the center of a stator tooth. However, the machine as disclosed in US 6239526 is characterized by a lower rotor anisotropy value for a given number of flux barriers, and therefore, low output performance (energy conversion efficiency, power factor) and low weight ratios (torque-weight ratio and power-weight ratio).

The object of the present invention is to increase output performance (energy conversion efficiency, power factor) and to increase weight ratios (torque-weight ratio and power-weight ratio) of the machine for a given number of flux barriers.

Summary of the Invention

The object of the invention is achieved by providing a synchronous reluctance machine comprising: a stator with a winding arranged within stator slots, and a rotor mounted with a gap with respect to the stator and rotatable with respect thereto, the rotor comprising radially alternating magnetically permeable layers and flux barriers, wherein each barrier extends between two peripheral ends extending towards the circumferential rotor surface, and wherein an angular distance $\alpha_0$ between adjacent peripheral ends of innermost barriers and an angular distance $\alpha_n$ between peripheral ends of the outer barrier, said distances expressed in electrical radians, satisfy the following inequation:

$$\frac{8}{\pi}\left(\frac{\sin^2(\alpha_n/2)}{\alpha_n}+\frac{(\sin(\alpha_n/2)-\cos(\alpha_0/2))^2}{\pi-\alpha_0-\alpha_n}\right)>0.95$$

It should be noted that here a flux barrier can be a continuous or a discontinuous magnetic flux barrier extending between two peripheral ends. In other words, the barrier can be separated into two or more sections by means of a magnetically permeable link.

The technical effect of the present invention is an increase in power factor and efficiency (including low-load operation) with low torque ripple and an increase in weight ratios (torque-weight ratio and power-weight ratio) for a given number of flux barriers.

In a preferred embodiment of the present invention, angular distances between adjacent peripheral barrier ends other than the distance between peripheral ends of the outer barrier include distances with variances more than 0.5 electrical degrees.

In this preferred embodiment, various peripheral barrier ends serving as independent parameters for optimization provide a decrease in torque ripple due to structural parameter selection, thus improving power factor, efficiency and weight ratios (torque-weight ratio and power-weight ratio), and decreasing torque ripple.

In a preferred embodiment of the present invention, the angular distance $\alpha_0$ between two adjacent peripheral ends of the innermost barriers and the angular distance $\alpha_n$ between peripheral ends of the outer barrier, said distances expressed in electrical radians, satisfy the following inequation:

$$\frac{8}{\pi}\left(\frac{\sin^2(\alpha_n/2)}{\alpha_n}+\frac{\left(\sin(\alpha_n/2)-\cos(\alpha_0/2)\right)^2}{\pi-\alpha_0-\alpha_n}\right)>0.96$$

In a preferred embodiment, the gap between a surface section of the external magnetically permeable layer and the stator is increased compared to other sections of the gap.

In a preferred embodiment, the gap between a surface section of the external magnetically permeable layer and the stator is increased by 15% to 400% compared to other sections of the gap.

In a preferred embodiment, the angular size $\beta$ of an increased gap section between the surface of the external magnetically permeable layer and the stator is $\beta<70$ electrical degrees.

The increased gap section provides decreased dissipation caused by the higher harmonics of the stator and the fundamental harmonic flux along the q-axis, thus providing a certain increase in output performance and weight ratios of the machine.

By providing the increased gap with an upper limit, wherein the increase does not exceed 400% of the size of other gap sections, a significant decrease in fundamental harmonic flux along the d-axis of high magnetic permeability can be avoided. Furthermore, a loss in aerodynamic properties of the rotor which could lead to an increase in ventilation loss and a decrease in efficiency can be avoided in the above solution.

In a preferred embodiment, both ends of the outer barrier extend towards the circumferential rotor surface, and the angular distance $\alpha_n$ between the ends of the outer barrier is selected such that: 90 electrical degrees $\leq \alpha_n \leq 120$ electrical degrees.

In a preferred embodiment, both ends of the outer barrier extend towards the circumferential rotor surface, and the angular distance $\alpha_n$ between the ends of the outer barrier is selected such that: 100 electrical degrees $\leq \alpha_n \leq 115$ electrical degrees.

The value $\alpha_n$ within the above ranges provides an increase in flux barrier length (and therefore, flux barrier volume) for a given number of flux barriers. The amount of magnetic core material is decreased thus lowering rotor mass and decreasing rotor inertia.

In a preferred embodiment, the number of barriers per pole is 2.

In another preferred embodiment, the number of barriers per pole is 3.

In a preferred embodiment, $\alpha_0 > 25$ electrical degrees.

In another preferred embodiment, $\alpha_0 > 30$ electrical degrees.

In various preferred embodiments, the number of barriers per pole is 2, the number of teeth per pole and phase is 2, $\alpha_0 = 20.7$ electrical degrees, $\alpha_1 = 24.5$ electrical degrees, $\alpha_n = 110.3$ electrical degrees, or

the number of barriers per pole is 3, the number of teeth per pole and phase is 3, $\alpha_0 = 16.6$ electrical degrees, $\alpha_1 = 16.4$ electrical degrees, $\alpha_2 = 13.7$ electrical degrees, $\alpha_n = 103.3$ electrical degrees, or

the number of barriers per pole is 2, the number of teeth per pole and phase is 3, $\alpha_0 = 35.3$ electrical degrees, $\alpha_1 = 15.1$ electrical degrees, $\alpha_n = 114.4$ electrical degrees, or

the number of barriers per pole is 2, the number of teeth per pole and phase is 2.5, $\alpha_0 = 31.4$ electrical degrees, $\alpha_1 = 19.1$ electrical degrees, $\alpha_n = 110.5$ electrical degrees, or

the number of barriers per pole is 2, the number of teeth per pole and phase is 1.5, $\alpha_0 = 23.0$ electrical degrees, $\alpha_1 = 30.5$ electrical degrees, $\alpha_n = 96.1$ electrical degrees, or

the number of barriers per pole is 2, the number of teeth per pole and phase is 3.5, $\alpha_0 = 29.7$ electrical degrees, $\alpha_1 = 18.7$ electrical degrees, $\alpha_n = 112.3$ electrical degrees, or

the number of barriers per pole is 2, the number of teeth per pole and phase is 4, $\alpha_0 = 34.5$ electrical degrees, $\alpha_1 = 20.1$ electrical degrees, $\alpha_n = 104.8$ electrical degrees.

In various preferred embodiments, the number of barriers per pole is n=2, the number of teeth per pole and phase is 2, 18 electrical degrees $\leq \alpha_0 \leq$ 24 electrical degrees, 21.5 electrical degrees $\leq \alpha_1 \leq$ 27.5 electrical degrees, 107 electrical degrees $\leq \alpha_n \leq$ 113 electrical degrees, or

the number of barriers per pole is n=3, the number of teeth per pole and phase is 3, 13.5 electrical degrees $\leq \alpha_0 \leq$ 19.5 electrical degrees, 13.5 electrical degrees $\leq \alpha_1 \leq$ 19.5 electrical degrees, 11 electrical degrees $\leq \alpha_2 \leq$ 17 electrical degrees, 100 electrical degrees $\leq \alpha_n \leq$ 106 electrical degrees, or

the number of barriers per pole is n=2, the number of teeth per pole and phase is 3, 32 electrical degrees $\leq \alpha_0 \leq$ 38 electrical degrees, 12 electrical degrees $\leq \alpha_1 \leq$ 18 electrical degrees, 111.5 electrical degrees $\leq \alpha_n \leq$ 117.5 electrical degrees, or

the number of barriers per pole is 2, the number of teeth per pole and phase is 2.5, 28 electrical degrees $\leq \alpha_0 \leq$ 34 electrical degrees, 16 electrical degrees $\leq \alpha_1 \leq$ 22 electrical degrees, 108 electrical degrees $\leq \alpha_n \leq$ 114 electrical degrees, or

the number of barriers per pole is 2, the number of teeth per pole and phase is 1.5, 20 electrical degrees $\leq \alpha_0 \leq$ 26 electrical degrees, 26.5 electrical degrees $\leq \alpha_1 \leq$ 33.5 electrical degrees, 94 electrical degrees $\leq \alpha_n \leq$ 103 electrical degrees, or

the number of barriers per pole is 2, the number of teeth per pole and phase is 3.5, 27 electrical degrees $\leq \alpha_0 \leq$ 33 electrical degrees, 16 electrical degrees $\leq \alpha_1 \leq$ 22 electrical degrees, 109 electrical degrees $\leq \alpha_n \leq$ 115 electrical degrees, or

the number of barriers per pole is 2, the number of teeth per pole and phase is 4, 31.5 electrical degrees $\leq \alpha_0 \leq$ 37.5 electrical degrees, 17 electrical degrees $\leq \alpha_1 \leq$ 23 electrical degrees, 100 electrical degrees $\leq \alpha_n \leq$ 105 electrical degrees.

In various preferred embodiments, the number of barriers per pole is n=2, the number of teeth per pole and phase is 2, 15 electrical degrees $\leq \alpha_0 \leq$ 27 electrical degrees, 18.5 electrical degrees $\leq \alpha_1 \leq$ 30.5 electrical degrees, 104 electrical degrees $\leq \alpha_n \leq$ 116 electrical degrees, or

the number of barriers per pole is n=3, the number of teeth per pole and phase is 3, 10.5 electrical degrees $\leq \alpha_0 \leq$ 22.5 electrical degrees, 10.5 electrical degrees $\leq \alpha_1 \leq$ 22.5 electrical degrees, 8 electrical degrees $\leq \alpha_2 \leq$ 20 electrical degrees, 97 electrical degrees $\leq \alpha_n \leq$ 109 electrical degrees, or

the number of barriers per pole is n=2, the number of teeth per pole and phase is 3, 29 electrical degrees $\leq \alpha_0 \leq$ 41 electrical degrees, 9 electrical degrees $\leq \alpha_1 \leq$ 21 electrical degrees, 108.5 electrical degrees $\leq \alpha_n \leq$ 120.5 electrical degrees, or

the number of barriers per pole is 2, the number of teeth per pole and phase is 2.5, 25.5 electrical degrees $\leq \alpha_0 \leq$ 37.5 electrical degrees, 11 electrical degrees $\leq \alpha_1 \leq$ 25 electrical degrees, 104.5 electrical degrees $\leq \alpha_n \leq$ 116.5 electrical degrees, or

the number of barriers per pole is 2, the number of teeth per pole and phase is 1.5, 17 electrical degrees $\leq \alpha_0 \leq$ 29 electrical degrees, 24.5 electrical degrees $\leq \alpha_1 \leq$ 36.5 electrical degrees, 90 electrical degrees $\leq \alpha_n \leq$ 104 electrical degrees, or

the number of barriers per pole is 2, the number of teeth per pole and phase is 3.5, 24 electrical degrees $\leq \alpha_0 \leq$ 36 electrical degrees, 13 electrical degrees $\leq \alpha_1 \leq$ 25 electrical degrees, 106 electrical degrees $\leq \alpha_n \leq$ 118 electrical degrees, or

the number of barriers per pole is 2, the number of teeth per pole and phase is 4, 28.5 electrical degrees $\leq \alpha_0 \leq$ 40.5 electrical degrees, 14 electrical degrees $\leq \alpha_1 \leq$ 26 electrical degrees, 99 electrical degrees $\leq \alpha_n \leq$ 111 electrical degrees.

In a preferred embodiment, magnetically the permeable layers are connected via inner and/or peripheral links, wherein peripheral links separate peripheral ends of barriers from the gap.

In a preferred embodiment, the barriers reach the gap, and the angular distances between adjacent peripheral ends of the barriers are angular distances between midpoints of outer circumference arcs of the transverse projection of the rotor, the arcs separating circumferentially adjacent magnetically permeable layers.

In a preferred embodiment, peripheral ends of the barriers are separated from the gap by a peripheral link, and the angular distances between adjacent peripheral ends of the barriers are angular distances between midpoints of peripheral link sections of minimum thickness in radial direction.

In a preferred embodiment, peripheral ends of the barriers are separated from the gap by a peripheral link, and the angular distances between adjacent peripheral ends of the barriers are angular distances between midpoints of peripheral link sections having a thickness in radial direction which deviates from minimum link thickness in radial direction by no more than 5%.

In a preferred embodiment, peripheral ends of the barriers are separated from the gap by a peripheral link, and the angular distances between adjacent peripheral ends of the barriers are angular distances between midpoints of peripheral link sections having a thickness in radial direction which deviates from minimum link thickness in radial direction by no more than 20%.

In a preferred embodiment, at least one of the flux barriers comprises a permanent magnet or multiple permanent magnets.

In a preferred embodiment, at least one of the flux barriers comprises a squirrel cage.

In a preferred embodiment, at least one of the flux barriers comprises a squirrel cage and a permanent magnet or multiple permanent magnets.

BRIEF DESCRIPTION OF THE DRAWINGS

The present invention is further described in the context of specific embodiments with reference to the accompanying drawings, wherein:

> FIG. 1 shows a rotor mounted within the stator enclosure according to an embodiment of the present invention;
> FIG. 2 shows the rotor of FIG. 1;
> FIG. 3 shows a rotor according to another embodiment of the present invention;

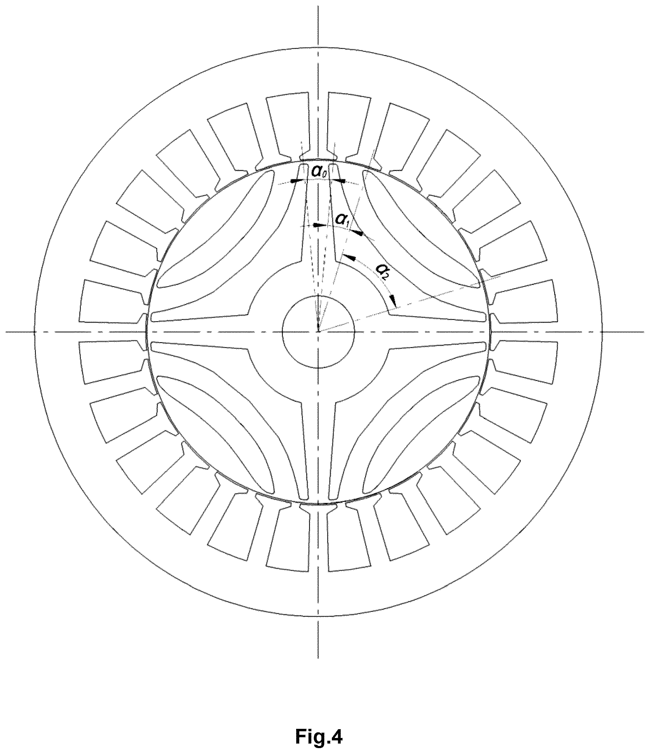

> FIG. 4 shows a rotor mounted within the stator enclosure according to yet another embodiment of the present invention;

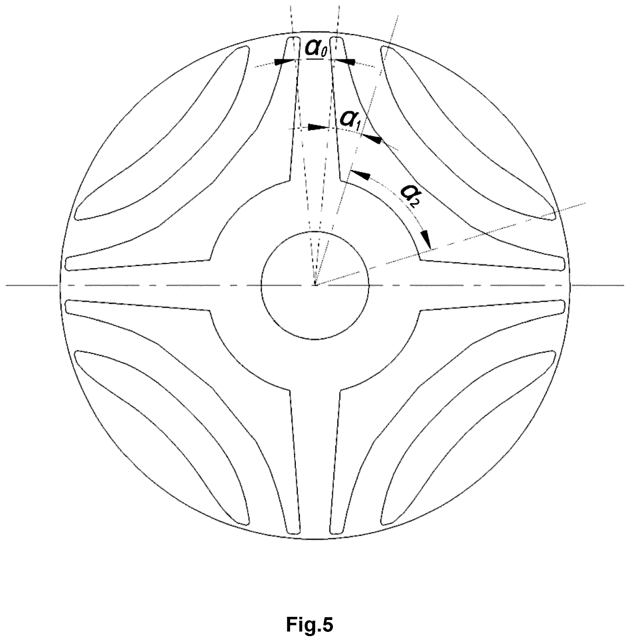

> FIG. 5 shows the rotor of FIG. 3;

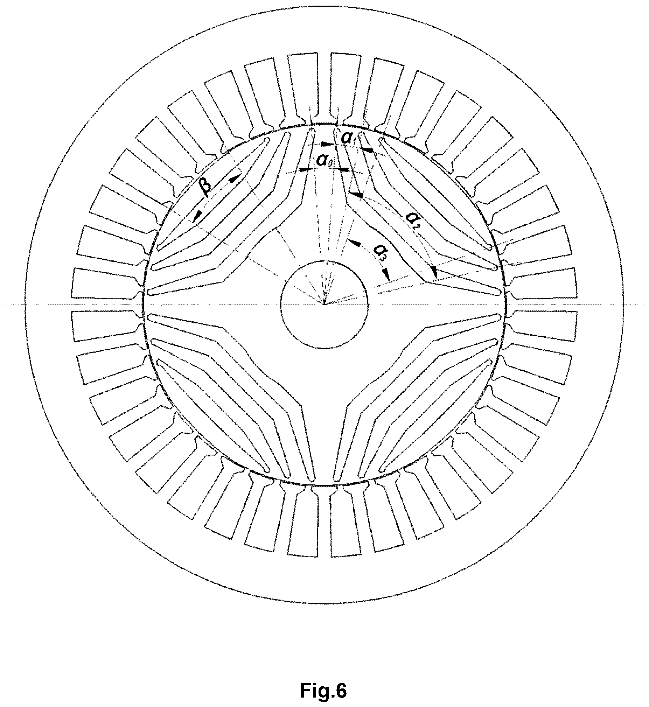

> FIG. 6 shows a rotor mounted within the stator enclosure according to yet another embodiment of the present invention;

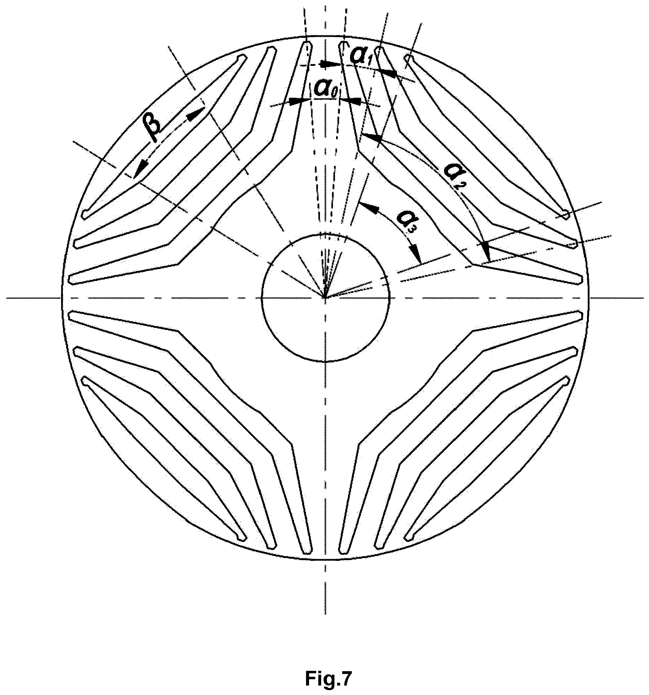

> FIG. 7 shows the rotor of FIG. 5;

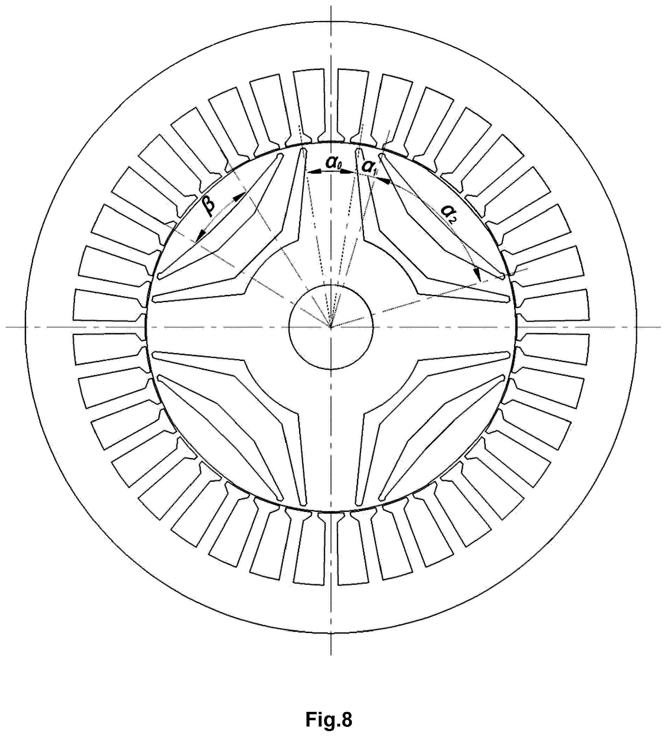

> FIG. 8 shows a rotor mounted within the stator enclosure according to yet another embodiment of the present invention;

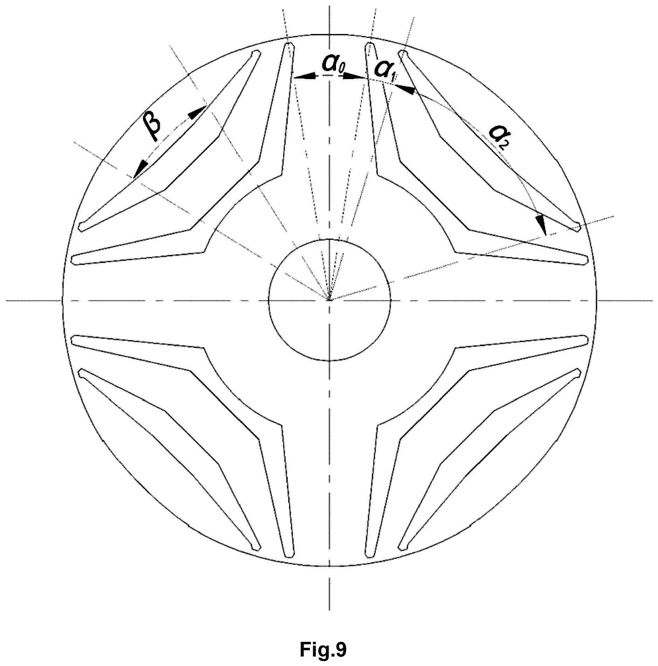

> FIG. 9 shows the rotor of FIG. 7;

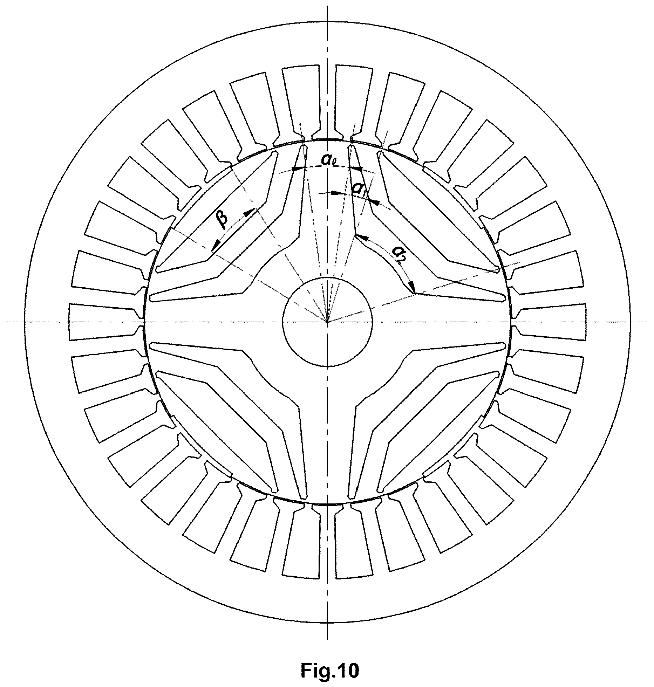

> FIG. 10 shows a rotor mounted within the stator enclosure according to yet another embodiment of the present invention;

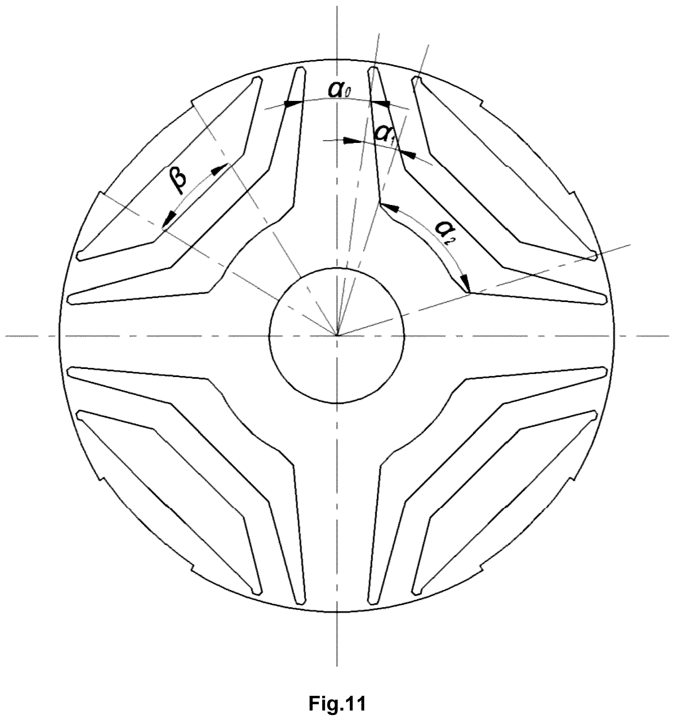

> FIG. 11 shows the rotor of FIG. 9;

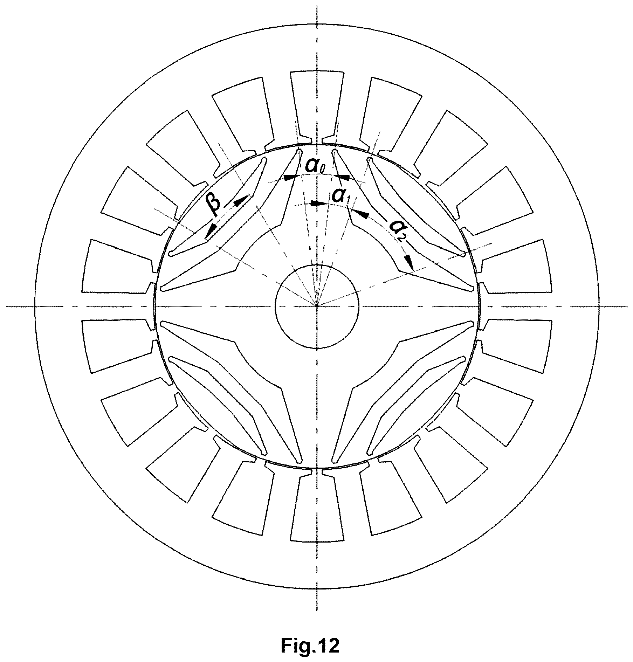

> FIG. 12 shows a rotor mounted within the stator enclosure according to yet another embodiment of the present invention;

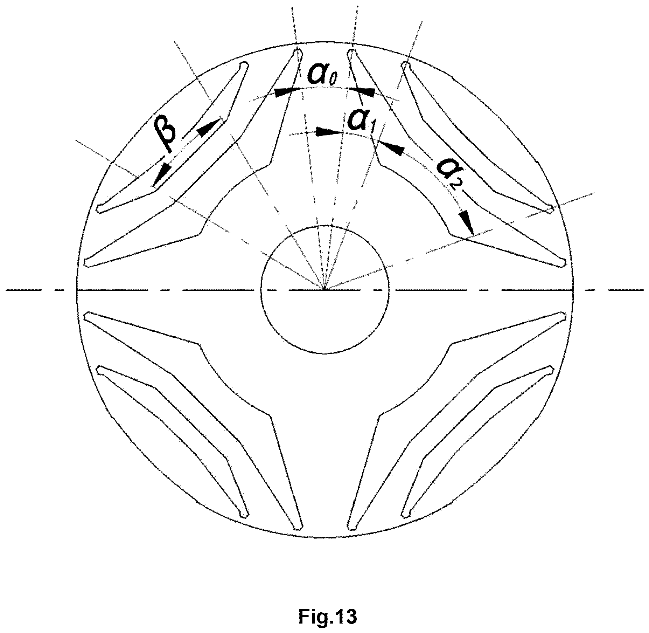

> FIG. 13 shows the rotor of FIG. 11;

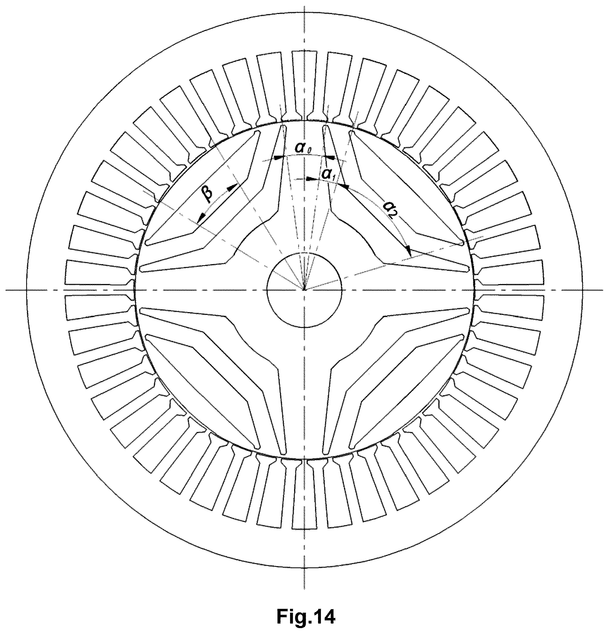

> FIG. 14 shows a rotor mounted within the stator enclosure according to yet another embodiment of the present invention;

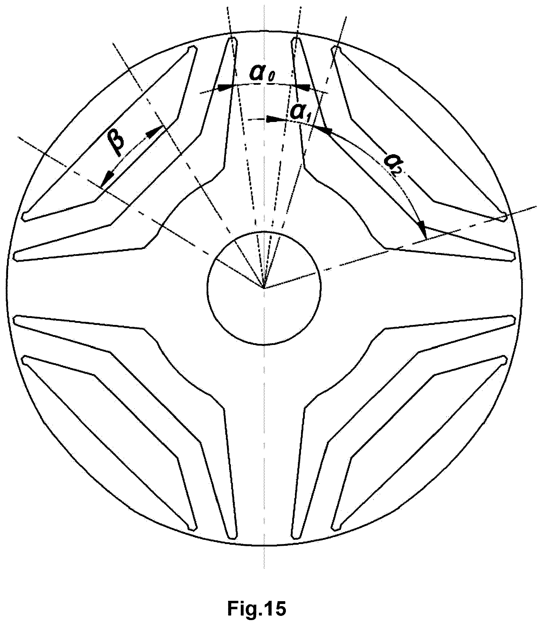

> FIG. 15 shows the rotor of FIG. 13;
> FIG. 16 shows a rotor according to yet another embodiment of the present invention;
> FIG. 17 shows a rotor according to yet another embodiment of the present invention; and
> FIG. 18 shows a rotor according to another embodiment of the present invention.

Detailed Description of the Invention

Embodiments of the present synchronous reluctance machine (SynRM) are aimed at providing an increase in output performance (energy conversion efficiency, power factor) and an increase in weight ratios (torque-weight ratio and power-weight ratio) of the machine for a given number of flux barriers.

In one embodiment, the SynRM comprises a stator with a winding arranged within stator slots, and a rotor mounted with a gap with respect to the stator and rotatable with respect thereto. Stator winding can be distributed or concentrated.

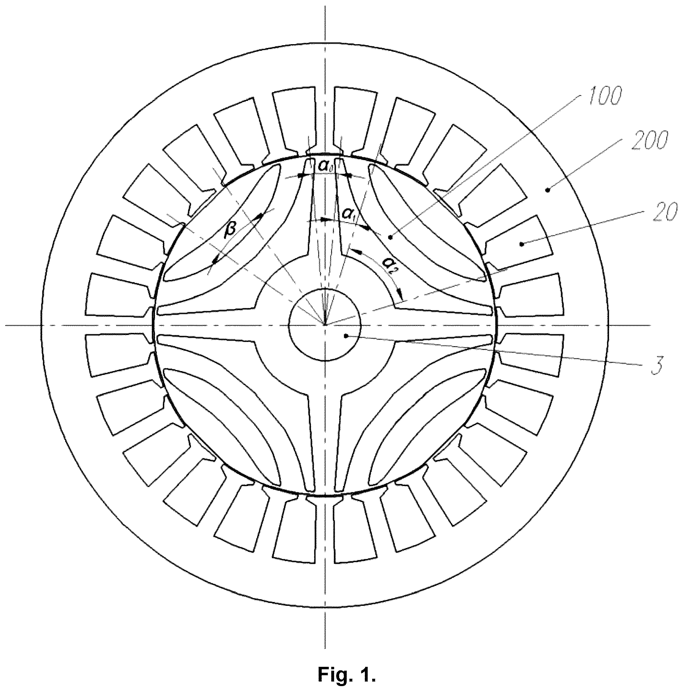

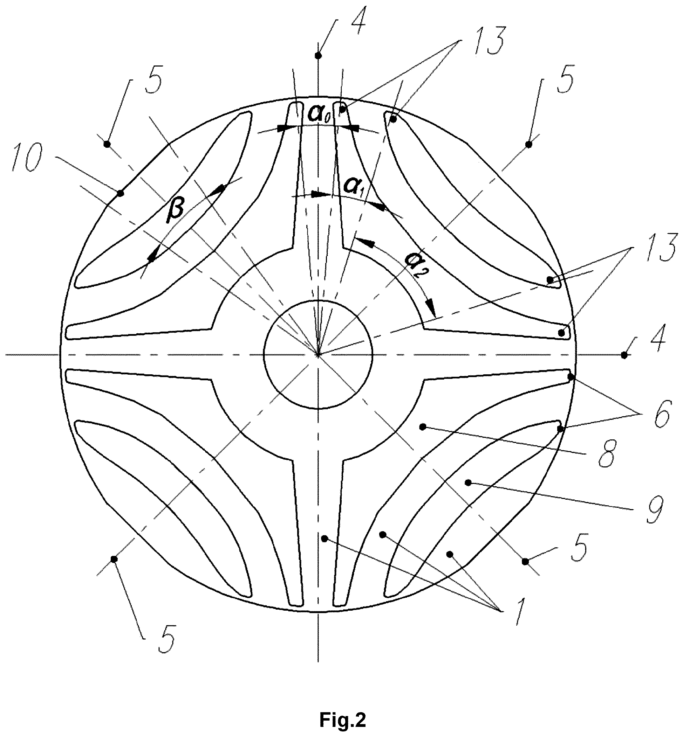

FIG. 1 illustrates a rotor 100 structure rotatably mounted on a shaft 3 within a stator 200 enclosure with a gap with respect to the stator 200, according to an embodiment of the present invention., and FIG. 2 shows the rotor 100 separately. According to an embodiment, the stator comprises slots 20 with stator windings (not shown) arranged therein. The rotor 100 is a steel cylinder comprised of sheets with transverse lamination. The rotor 100 comprises radially alternating magnetically permeable layers 1 (i.e., layers with high magnetic permeability) and flux barriers 8 and 9 (i.e., layers with low magnetic permeability). The d-axis of high magnetic permeability is denoted by reference numeral 4, and the q-axis of low magnetic permeability is denoted by reference numeral 5. Flux barriers 8, 9 are formed by cutting longitudinal slits in the sheets, i.e., the barriers are air cavities in the magnetically permeable material. Barriers 8, 9 have an elongated shape and extend between two ends extending towards the circumferential rotor surface and referred to as "peripheral ends" herein. Rotor integrity is provided by thin links connecting magnetically permeable layers 1. Links arranged on the rotor circumference are referred to as peripheral links, while the remaining links are referred to as inner links. The peripheral links separate peripheral ends of the barriers from the gap. The inner links separate one section of a barrier from another section of the same barrier.

As can be seen in FIGS. 1 and 2, barriers 8, 9 each comprise two peripheral ends 13 separated from the gap by peripheral links 6 and do not comprise inner links.

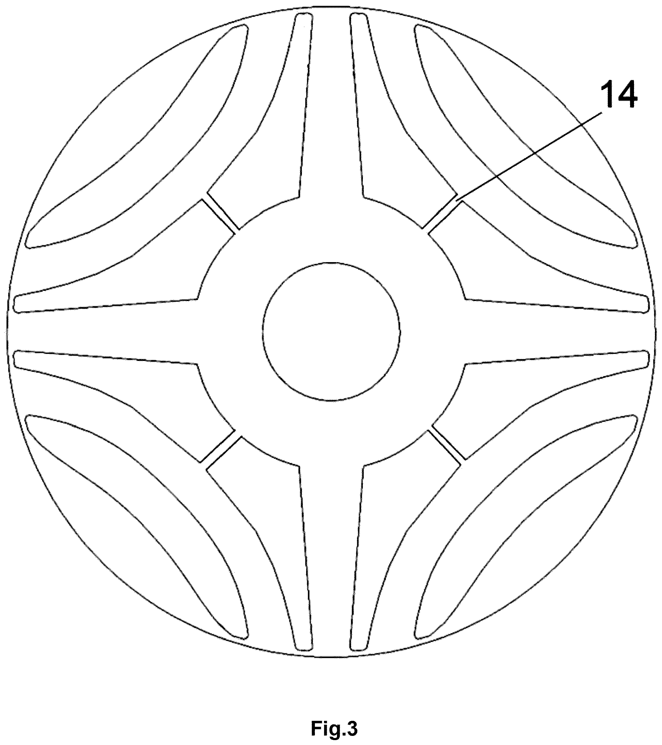

However, in other embodiments of the rotor, some or all flux barriers can comprise multiple (e.g., two) sections separated from each other by inner links, the links improving mechanical stability of the rotor. For example, FIG. 3 shows an embodiment of the rotor wherein the barrier 8 is separated by an inner link 14 into sections 11, 12, each section bounded by a peripheral end 13 and an inner end 17. Further, some or all flux barriers can be separated by two inner links or more, thus forming three or more sections. For instance, when a barrier is separated into three sections, each of the two side sections is bounded by a peripheral end and an inner end, while the middle section is bounded by two inner ends.

In some embodiments, flux barriers reach the gap, i.e., links between peripheral ends thereof and the gap are absent.

In some embodiments, the gap between the surface of the external magnetically permeable layer and the stator is uniform along the entire circumferential rotor surface.

In some embodiments, the rotor 100 comprises a cutout 10 formed in the proximity of the q-axis. The deviations from the cylindrical shape of the rotor increase magnetic anisotropy and decrease magnetic flux dissipation in the higher harmonics of the stator, thus increasing output performance of the machine (energy conversion coefficient, power factor) and increasing weight ratios (torque-weight ratio and power-weight ratio).

In yet another embodiment, the gap between a surface section of the external magnetically permeable layer in the proximity of the q-axis and the stator is increased by 15-400%, preferably by 15-200%, compared to other sections of the gap due to said cutout 10. Small deviations from the cylindrical shape of the rotor allow it to retain excellent hydrodynamic properties, eliminate magnetic flux dissipation and the q-axis flux, increase magnetic anisotropy, and only marginally impede flux path on the d-axis, thus further increasing output performance of the machine (energy conversion coefficient, power factor) and increasing weight ratios (torque-weight ratio and power-weight ratio).

In a preferred embodiment, the angular size $\beta$ of an increased gap section between the surface of the external magnetically permeable layer and the stator is $\beta < 70$ electrical degrees.

It should be noted that although, in the above embodiments, the gap between a surface section of the external magnetically permeable layer in the proximity of the q-axis and the stator is increased by forming a cutout in the rotor in the proximity of the q-axis, in other embodiments, the gap can be increased using any suitable method.

According to yet another embodiment, flux barriers 8, 9 reach the air gap. In this case, rotor integrity can be provided by at least one inner link.

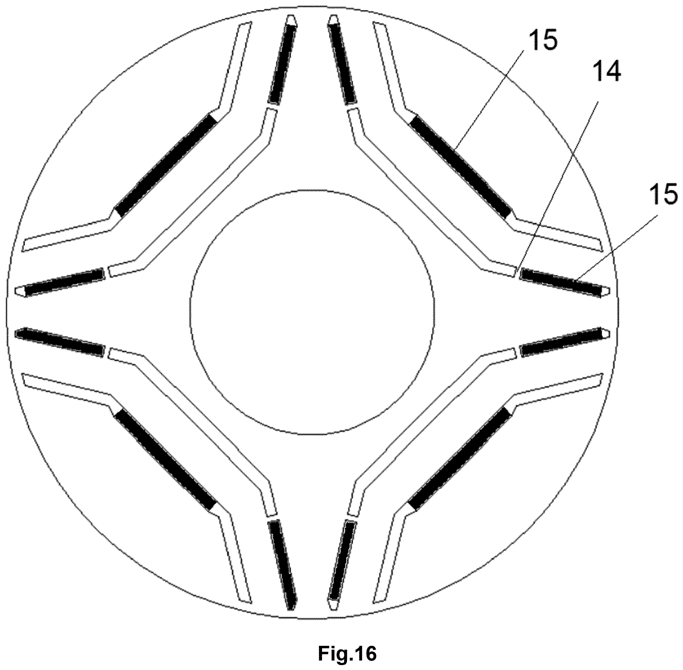

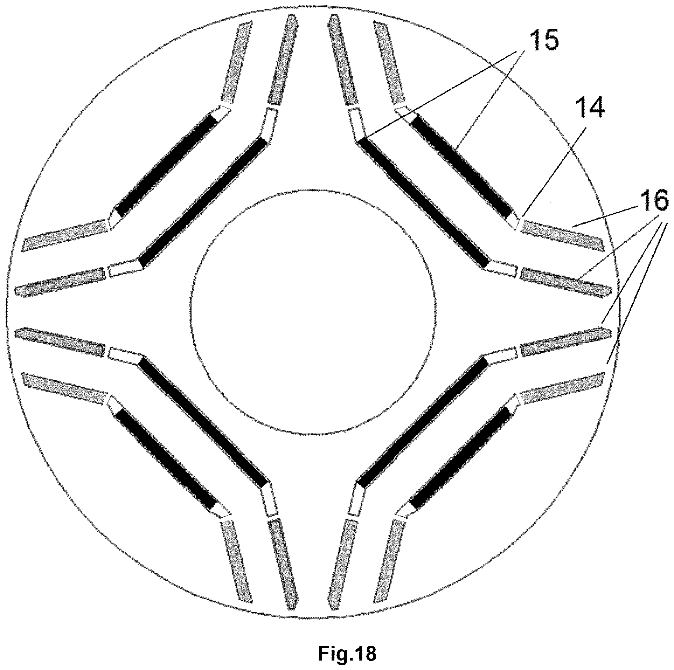

In various embodiments, at least one permanent magnet 15 (in particular, a rare-earth magnet, an alnico magnet, a ferrite magnet, etc.) can be mounted into one or more flux barriers as shown in FIGS. 16 and 18. In some embodiments, permanent magnets can be mounted into all flux barriers. In some embodiments of the present invention, permanent magnets occupy a portion of the flux barrier. In some embodiments, the rotor comprises inner links 14 separating flux barriers with permanent magnets and providing more accurate positioning of permanent magnets within the barriers to alleviate rotor imbalance. Links further provide mechanical stability to the rotor. According to yet another embodiment of the present invention, permanent magnets can take up the entirety of one or more flux barriers. In other embodiments, magnets can be precisely positioned due to the narrowing of barriers impeding magnet movement.

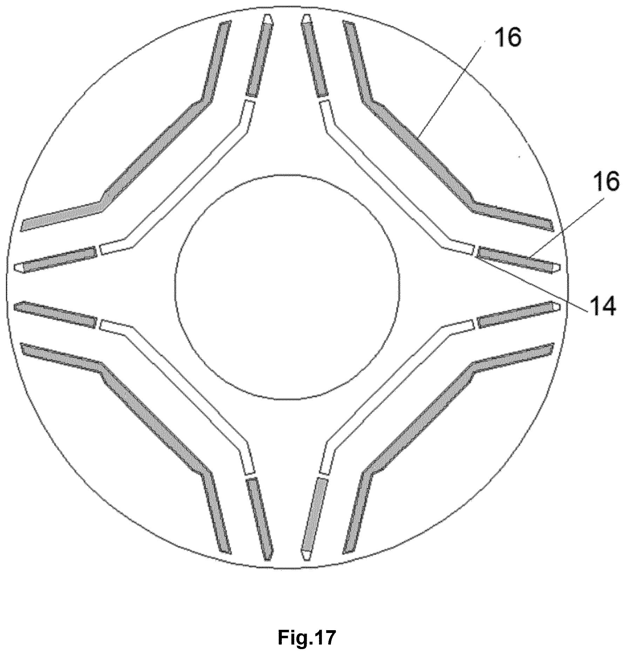

In some embodiments, at least two flux barriers comprise a squirrel cage 16, as shown in FIGS. 17, 18. In other embodiments, flux barriers can comprise both a squirrel cage and permanent magnet(s).

As seen in FIGS. 1 and 2, peripheral ends of flux barriers 8, 9 are arranged along the circumferential rotor surface in circumferential direction and are characterized by angular distance $\alpha_i$ between adjacent peripheral ends. Therefore, in FIGS. 1 and 2, the angular distance between adjacent peripheral ends of the innermost barriers is denoted as $\alpha_0$, the angular distance between a peripheral end of one of the innermost barriers 8 and an adjacent peripheral end of the next (in the direction along the circumferential rotor surface towards the q-axis) barrier 9 is denoted as $\alpha_1$, and the angular distance between peripheral ends of the external barrier is denoted as $\alpha_2$.

Generally, $\alpha_0$, is used herein to denote the distance between adjacent peripheral ends of the innermost barriers, $\alpha_n$ is used herein to denote the distance between peripheral ends of the external barrier, while all successive distances between adjacent peripheral ends from $\alpha_0$ to $\alpha_n$ in circumferential direction are denoted as $\alpha_1 \ldots \alpha_{n-1}$.

In order to provide an increase in output performance (energy conversion efficiency, power factor) and weight ratios (torque-weight ratio and power-weight ratio) of the machine for a given number of flux barriers, the rotor parameters are optimized, particularly ratios $\alpha_0/\alpha_n$ for the angular distances. The following rotor parameters are used hereinbelow: $L_d$, $L_q$ - inductance along the d-axis and the q-axis, respectively; $I_d$, $I_q$ - currents exciting the d-axis flux and the q-axis flux, respectively. The following assumptions are made:

1. The air gap between the rotor and the stator is homogenous.
2. The air gap flux density is proportional to the magnetic potential difference between the magnetically permeable rotor layer and the stator.
3. No cutouts are formed in the proximity of the q-axis, as such cutouts only marginally affect the parameters of a synchronous reluctance machine.
4. The magnetic potential of each magnetically permeable layer is uniform across the entire magnetically permeable layer and is equal to the mean magnetic potential value of stator sections over which the surface of said magnetically permeable layer facing the stator is located.

4. Dissipation in the gap (i.e., magnetic fields in stator gaps) and coil-end dissipation (i.e., magnetic fields of coil ends) are ignored, as said values simultaneously increase both $L_d$ and $L_q$ without altering the difference in said values. Further, magnetic fields in rotor flux barriers are also ignored, as, when properly designed, said fields do not affect motor operation to a significant degree.

5. The number (n) of barrier exits at the rotor circumference section bounded by the adjacent d-axis and q-axis (i.e., the number of barriers per pole) is 2.

Furthermore, relative measurement units for values $L_d$, $L_q$, are used so that said values are equal to 1 when flux barriers are absent. Furthermore, due to the fact that flux barriers create no obstructions for the d-axis flux, the value of $L_d$ is also equal to 1 when flux barriers are present.

Using the above assumptions, the following formula for $L_q$ inductance was obtained for the fundamental harmonic of the magnetic field:

$$L_q = 1 - \frac{8}{\pi} \left( \frac{\sin^2(\alpha_n / 2)}{\alpha_n} + \frac{\left(\sin(\alpha_n / 2) - \cos(\alpha_0 / 2)\right)^2}{\pi - \alpha_0 - \alpha_n} \right), \qquad (1)$$

where $\alpha_0$ is the angular distance between two adjacent peripheral ends of the innermost barriers, and $\alpha_n$ is the angular distance between peripheral ends of the outer barrier, said distances expressed in electrical radians.

Additional barriers and a cutout in proximity of the q-axis inhibiting the q-axis flux do not increase the value of $L_q$. Therefore, the $L_q$ value expressed above (1) is also applicable when n>2.

Shaft torque of a synchronous reluctance machine is equal to $T = \frac{3}{2}(L_d - L_q)I_d I_q$, therefore at identical values for current (and therefore, identical loss in stator windings) the torque increases with the decrease in $L_q$. In other words, a decrease in $L_q$ increases the power factor and efficiency as well as weight ratios (torque-weight ratio and power-weight ratio) for a given number of flux barriers.

It should be noted that although the evaluation was initially carried out for the number of barriers between adjacent axes (d-axis and q-axis) of 2, the addition of a further barrier does not lead to an increase in $L_q$. Therefore, the formula (1) is valid for a synchronous reluctance machine with a higher number of barriers, e.g., with 3 or more barriers.

Therefore, during optimization of rotor parameters, the claimant obtained the following correlation between angular distances $\alpha_0$ and $\alpha_n$ providing an increase in power factor and efficiency (including low-load operation) while also providing low torque ripple and an increase in weight ratios (torque-weight ratio and power-weight ratio) for a given number of flux barriers:

$$\frac{8}{\pi} \left( \frac{\sin^2(\alpha_n / 2)}{\alpha_n} + \frac{\left(\sin(\alpha_n / 2) - \cos(\alpha_0 / 2)\right)^2}{\pi - \alpha_0 - \alpha_n} \right) > 0.95 \qquad (2)$$

In another preferred embodiment, a further increase in power factor and efficiency (including low-load operation) with low torque ripple and an increase in weight ratios (torque-weight ratio and power-weight ratio) for a given number of flux barriers are achieved using the following formula:

$$\frac{8}{\pi} \left( \frac{\sin^2(\alpha_n / 2)}{\alpha_n} + \frac{\left(\sin(\alpha_n / 2) - \cos(\alpha_0 / 2)\right)^2}{\pi - \alpha_0 - \alpha_n} \right) > 0.96 \, . \qquad (3)$$

The Table below provides exemplary embodiments of the present invention obtained by maximizing efficiency and the power factor whilst minimizing torque ripple using a mathematical model based on the finite element method (FEM) among multiple variations based on the formula (3). The rightmost column lists references to figures illustrating the corresponding embodiments.

| Number n of barriers per pole | Number q of teeth per pole and phase | $\alpha_0$, electrical degrees | $\alpha_1$, electrical degrees | $\alpha_2$, electrical degrees | $\alpha_n$, electrical degrees | $L_q$ in (1) | Torque ripple, root mean square, % of the mean value | FIG. |
|---|---|---|---|---|---|---|---|---|
| 2 | 2 | 20.7 | 24.5 | | 110.3 | 0.030 | 3.3 | 1; 2; 3; 4; 5 |
| 3 | 3 | 16.6 | 16.4 | 13.7 | 103.3 | 0.029 | 3.5 | 6; 7 |
| 2 | 3 | 35.3 | 15.1 | | 114.4 | 0.038 | 2 | 8; 9 |
| 2 | 2.5 | 31.4 | 19.1 | | 110.5 | 0.032 | 1.4 | 10; 11 |
| 2 | 1.5 | 23 | 30.5 | | 96.1 | 0.027 | 1.8 | 12; 13 |
| 2 | 3.5 | 29.7 | 18.7 | | 112.3 | 0.033 | 1.6 | 14; 15 |
| 2 | 4 | 34.5 | 20.1 | | 104.8 | 0.031 | 1.7 | |

Preferably, windings are formed without pitch reduction (including concentric windings, in which case, this statement refers to mean pitch) or with pitch reduction.

A cutout can be formed, the cutout potentially shifting the optimal values of angles $\alpha_0$ and $\alpha_n$ by up to 4 electrical degrees. Such a shift is possible due to structural characteristics of individual machines.

Preferred $\alpha_i$ value ranges for combinations of the number of barriers and the number of teeth per pole and phase listed in the Table.

In various preferred embodiments, the number of barriers per pole is n=2, the number of teeth per pole and phase is 2, 18 electrical degrees $\leq \alpha_0 \leq$ 24 electrical degrees, 21.5 electrical degrees $\leq \alpha_1 \leq$ 27.5 electrical degrees, 107 electrical degrees $\leq \alpha_n \leq$ 113 electrical degrees;

the number of barriers per pole is n=3, the number of teeth per pole and phase is 3, 13.5 electrical degrees $\leq \alpha_0 \leq$ 19.5 electrical degrees, 13.5 electrical degrees $\leq \alpha_1 \leq$ 19.5 electrical degrees, 11 electrical degrees $\leq \alpha_2 \leq$ 17 electrical degrees, 100 electrical degrees $\leq \alpha_n \leq$ 106 electrical degrees;

the number of barriers per pole is n=2, the number of teeth per pole and phase is 3, 32 electrical degrees $\leq \alpha_0 \leq$ 38 electrical degrees, 12 electrical degrees $\leq \alpha_1 \leq$ 18 electrical degrees, 111.5 electrical degrees $\leq \alpha_n \leq$ 117.5 electrical degrees;

the number of barriers per pole is 2, the number of teeth per pole and phase is 2.5, 28 electrical degrees $\leq \alpha_0 \leq$ 34 electrical degrees, 16 electrical degrees $\leq \alpha_1 \leq$ 22 electrical degrees, 108 electrical degrees $\leq \alpha_n \leq$ 114 electrical degrees;

the number of barriers per pole is 2, the number of teeth per pole and phase is 1.5, 20 electrical degrees $\leq \alpha_0 \leq$ 26 electrical degrees, 26.5 electrical degrees $\leq \alpha_1 \leq$ 33.5 electrical degrees, 94 electrical degrees $\leq \alpha_n \leq$ 103 electrical degrees;

the number of barriers per pole is 2, the number of teeth per pole and phase is 3.5, 27 electrical degrees $\leq \alpha_0 \leq$ 33 electrical degrees, 16 electrical degrees $\leq \alpha_1 \leq$ 22 electrical degrees, 109 electrical degrees $\leq \alpha_n \leq$ 115 electrical degrees;

the number of barriers per pole is 2, the number of teeth per pole and phase is 4, 31.5 electrical degrees $\leq \alpha_0 \leq$ 37.5 electrical degrees, 17 electrical degrees $\leq \alpha_1 \leq$ 23 electrical degrees, 100 electrical degrees $\leq \alpha_n \leq$ 105 electrical degrees.

In various preferred embodiments, the number of barriers per pole is n=2, the number of teeth per pole and phase is 2, 15 electrical degrees $\leq \alpha_0 \leq$ 27 electrical degrees, 18.5 electrical degrees $\leq \alpha_1 \leq$ 30.5 electrical degrees, 104 electrical degrees $\leq \alpha_n \leq$ 116 electrical degrees;

the number of barriers per pole is n=3, the number of teeth per pole and phase is 3, 10.5 electrical degrees $\leq \alpha_0 \leq$ 22.5 electrical degrees, 10.5 electrical degrees $\leq \alpha_1 \leq$ 22.5 electrical degrees, 8 electrical degrees $\leq \alpha_2 \leq$ 20 electrical degrees, 97 electrical degrees $\leq \alpha_n \leq$ 109 electrical degrees;

the number of barriers per pole is n=2, the number of teeth per pole and phase is 3, 29 electrical degrees $\leq \alpha_0 \leq$ 41 electrical degrees, 9 electrical degrees $\leq \alpha_1 \leq$ 21 electrical degrees, 108.5 electrical degrees $\leq \alpha_n \leq$ 120.5 electrical degrees;

the number of barriers per pole is 2, the number of teeth per pole and phase is 2.5, 25.5 electrical degrees $\leq \alpha_0 \leq 37.5$ electrical degrees, 11 electrical degrees $\leq \alpha_1 \leq 25$ electrical degrees, 104.5 electrical degrees $\leq \alpha_n \leq 116.5$ electrical degrees;

the number of barriers per pole is 2, the number of teeth per pole and phase is 1.5, 17 electrical degrees $\leq \alpha_0 \leq 29$ electrical degrees, 24.5 electrical degrees $\leq \alpha_1 \leq 36.5$ electrical degrees, 90 electrical degrees $\leq \alpha_n \leq 104$ electrical degrees;

the number of barriers per pole is 2, the number of teeth per pole and phase is 3.5, 24 electrical degrees $\leq \alpha_0 \leq 36$ electrical degrees, 13 electrical degrees $\leq \alpha_1 \leq 25$ electrical degrees, 106 electrical degrees $\leq \alpha_n \leq 118$ electrical degrees;

the number of barriers per pole is 2, the number of teeth per pole and phase is 4, 28.5 electrical degrees $\leq \alpha_0 \leq 40.5$ electrical degrees, 14 electrical degrees $\leq \alpha_1 \leq 26$ electrical degrees, 99 electrical degrees $\leq \alpha_n \leq 111$ electrical degrees.

In some preferred embodiments, the following conditions are met: $\alpha_0 > 25$ electrical degrees, preferably $\alpha_0 > 30$ electrical degrees. In some preferred embodiments, the following conditions are met: $\alpha_0 > 25$ electrical degrees, preferably $\alpha_0 > 30$ electrical degrees, 90 electrical degrees $\leq \alpha_n \leq 120$ electrical degrees, preferably 100 electrical degrees $\leq \alpha_n \leq 115$ electrical degrees. US 5818140 A roughly defines the pitch between barrier exit positions towards the circumferential rotor surface, however, the number of barriers cannot be arbitrary. Furthermore, a portion of barriers can be absent. The implementations of the present invention define rotor surface sections to which barriers do not correspond, i.e., sections whereon barrier exits towards the circumferential rotor surface can be absent. Therefore, the number of barriers is decreased, thus decreasing motor manufacturing costs. Further, steel degradation during barrier formation is also decreased. Moreover, due to the fact that sectors between adjacent peripheral ends of the innermost barriers form the supporting frame of the rotor, an $\alpha_0$ lower limit leads to an increase in stability and reliability of the rotor structure. Further, radial forces and rotational torque are mainly localized on rotor surface sections in proximity of the d-axis. Therefore, an increased solid section lacking barriers in proximity of the d-axis further improves structural stability.

In a preferred embodiment of the present invention, angular distances between adjacent peripheral barrier ends other than the distance between peripheral ends of the outer barrier include distances with variances more than 0.5 electrical degrees.

In this preferred embodiment, various peripheral barrier ends serving as independent parameters for optimization provide a decrease in torque ripple due to structural parameter selection, thus improving output performance and weight ratios (torque-weight ratio and power-weight ratio).

Angular distances $\alpha_i$ can be defined using various methods.

In an embodiment, flux barriers reach the gap, and the angular distances between adjacent peripheral ends of the barriers are angular distances between midpoints of outer circumference arcs of the transverse projection of the rotor, the arcs separating circumferentially adjacent magnetically permeable layers.

In another embodiment, peripheral ends of the barriers are separated from the gap by a peripheral link, and the angular distances between adjacent peripheral ends of the barriers are angular distances between midpoints of peripheral link sections of minimum thickness in radial direction.

In yet another embodiment, peripheral ends of the barriers are separated from the gap by a peripheral link, and the angular distances between adjacent peripheral ends of the barriers are angular distances between midpoints of peripheral link sections having a thickness in radial direction which deviates from minimum link thickness in radial direction by no more than 5% or deviates from minimum link thickness in radial direction by no more than 20%.

In other embodiments of the present invention, angular distances can be defined using other suitable methods.

The synchronous reluctance machine according to various embodiments is operated as follows. The alternating current flowing along stator windings induces a rotating magnetic field in the air gap. A rotational torque is formed due to the fact that the rotor strives to position rotor axis of high magnetic permeability (d-axis) in such manner with respect to the magnetic field so as to minimize magnetic reluctance in the magnetic circuit.

It should be noted that herein, the disclosure of characteristics or features of the synchronous reluctance machine in the context of a section of the rotor arc and/or d-axis area and/or q-axis area should be interpreted as encompassing all analogous sections of the rotor arc and/or d-axis areas and/or q-axis areas.

The embodiments of the present invention described above are provided as non-limiting examples and should not be construed as limiting the spirit and scope of the present invention defined by the accompanying claims.

**Claims**

1. A synchronous reluctance machine comprising:

   a stator with a winding arranged within stator slots,
   a rotor mounted with a gap with respect to the stator and rotatable with respect thereto, the rotor comprising radially alternating magnetically permeable layers and flux barriers,

wherein each barrier extends between two peripheral ends extending towards the circumferential rotor surface, and

wherein an angular distance $\alpha_0$ between adjacent peripheral ends of innermost barriers and an angular distance $a_n$ between peripheral ends of an outer barrier, said distances expressed in electrical radians, satisfy the following inequation:

$$\frac{8}{\pi}\left(\frac{\sin^2(\alpha_n/2)}{\alpha_n}+\frac{\left(\sin(\alpha_n/2)-\cos(\alpha_0/2)\right)^2}{\pi-\alpha_0-\alpha_n}\right) > 0.95$$

2. The machine according to claim 1, wherein angular distances between adjacent peripheral barrier ends other than the distance between peripheral ends of the outer barrier include distances with variances more than 0.5 electrical degrees.

3. The machine according to claim 1 or claim 2, wherein the angular distance $\alpha_0$ between two adjacent peripheral ends of the innermost barriers and the angular distance $\alpha_n$ between peripheral ends of the outer barrier, said distances expressed in electrical radians, satisfy the following inequation:

$$\frac{8}{\pi}\left(\frac{\sin^2(\alpha_n/2)}{\alpha_n}+\frac{\left(\sin(\alpha_n/2)-\cos(\alpha_0/2)\right)^2}{\pi-\alpha_0-\alpha_n}\right) > 0.96$$

4. The machine according to any one of claims 1-3, wherein the gap between a surface section of the external magnetically permeable layer and the stator is increased compared to other sections of the gap.

5. The machine according to claim 4, wherein the gap between a surface section of the external magnetically permeable layer and the stator is increased by 15% to 400% compared to other sections of the gap.

6. The machine according to claim 4 or claim 5, wherein an angular size $\beta$ of the increased gap section between the surface of the external magnetically permeable layer and the stator is $\beta < 70$ electrical degrees.

7. The machine according to any one of claims 1-6, wherein both ends of the outer barrier extend towards the circumferential rotor surface, and the angular distance $\alpha_n$ between the ends of the outer barrier is selected such that: 90 electrical degrees $\leq \alpha_n \leq$ 120 electrical degrees.

8. The machine according to claim 7, wherein both ends of the outer barrier extend towards the circumferential rotor surface, and the angular distance $\alpha_n$ between the ends of the outer barrier is selected such that: 100 electrical degrees $\leq \alpha_n \leq$ 115 electrical degrees.

9. The machine according to any one of claims 1-8, wherein the number of barriers per pole is 2.

10. The machine according to any one of claims 1-8, wherein the number of barriers per pole is 3.

11. The machine according to any one of claims 1-10, wherein $\alpha_0 > 25$ electrical degrees.

12. The machine according to claim 11, wherein $\alpha_0 > 30$ electrical degrees.

13. The machine according to any one of claims 1-7, wherein:

the number of barriers per pole is 2, the number of teeth per pole and phase is 2, $\alpha_0 = 20.7$ electrical degrees, $\alpha_1 = 24.5$ electrical degrees, $\alpha_n = 110.3$ electrical degrees, or

the number of barriers per pole is 3, the number of teeth per pole and phase is 3, $\alpha_0 = 16.6$ electrical degrees, $\alpha_1 = 16.4$ electrical degrees, $\alpha_2 = 13.7$ electrical degrees, $\alpha_n = 103.3$ electrical degrees, or

the number of barriers per pole is 2, the number of teeth per pole and phase is 3, $\alpha_0 = 35.3$ electrical degrees, $\alpha_1 = 15.1$ electrical degrees, $\alpha_n = 114.4$ electrical degrees, or

the number of barriers per pole is 2, the number of teeth per pole and phase is 2.5, $\alpha_0 = 31.4$ electrical degrees,

$\alpha_1$ = 19.1 electrical degrees, $\alpha_n$ = 110.5 electrical degrees, or
the number of barriers per pole is 2, the number of teeth per pole and phase is 1.5, $\alpha_0$ = 23.0 electrical degrees, $\alpha_1$ = 30.5 electrical degrees, $\alpha_n$ = 96.1 electrical degrees, or
the number of barriers per pole is 2, the number of teeth per pole and phase is 3.5, $\alpha_0$ = 29.7 electrical degrees, $\alpha_1$ = 18.7 electrical degrees, $\alpha_n$ = 112.3 electrical degrees, or
the number of barriers per pole is 2, the number of teeth per pole and phase is 4, $\alpha_0$ = 34.5 electrical degrees, $\alpha_1$ = 20.1 electrical degrees, $\alpha_n$ = 104.8 electrical degrees.

14. The machine according to any one of claims 1-7, wherein:

the number of barriers per pole is n=2, the number of teeth per pole and phase is 2, 18 electrical degrees $\leq \alpha_0$ $\leq$ 24 electrical degrees, 21.5 electrical degrees $\leq \alpha_1 \leq$ 27.5 electrical degrees, 107 electrical degrees $\leq \alpha_n \leq$ 113 electrical degrees, or
the number of barriers per pole is n=3, the number of teeth per pole and phase is 3, 13.5 electrical degrees $\leq \alpha_0 \leq$ 19.5 electrical degrees, 13.5 electrical degrees $\leq \alpha_1 \leq$ 19.5 electrical degrees, 11 electrical degrees $\leq \alpha_2 \leq$ 17 electrical degrees, 100 electrical degrees $\leq \alpha_n \leq$ 106 electrical degrees, or
the number of barriers per pole is n=2, the number of teeth per pole and phase is 3, 32 electrical degrees $\leq \alpha_0$ $\leq$ 38 electrical degrees, 12 electrical degrees $\leq \alpha_1 \leq$ 18 electrical degrees, 111.5 electrical degrees $\leq \alpha_n \leq$ 117.5 electrical degrees, or
the number of barriers per pole is 2, the number of teeth per pole and phase is 2.5, 28 electrical degrees $\leq \alpha_0$ $\leq$ 34 electrical degrees, 16 electrical degrees $\leq \alpha_1 \leq$ 22 electrical degrees, 108 electrical degrees $\leq \alpha_n \leq$ 114 electrical degrees, or
the number of barriers per pole is 2, the number of teeth per pole and phase is 1.5, 20 electrical degrees $\leq \alpha_0$ $\leq$ 26 electrical degrees, 26.5 electrical degrees $\leq \alpha_1 \leq$ 33.5 electrical degrees, 94 electrical degrees $\leq \alpha_n \leq$ 103 electrical degrees, or
the number of barriers per pole is 2, the number of teeth per pole and phase is 3.5, 27 electrical degrees $\leq \alpha_0$ $\leq$ 33 electrical degrees, 16 electrical degrees $\leq \alpha_1 \leq$ 22 electrical degrees, 109 electrical degrees $\leq \alpha_n \leq$ 115 electrical degrees, or
the number of barriers per pole is 2, the number of teeth per pole and phase is 4, 31.5 electrical degrees $\leq \alpha_0$ $\leq$ 37.5 electrical degrees, 17 electrical degrees $\leq \alpha_1 \leq$ 23 electrical degrees, 100 electrical degrees $\leq \alpha_n \leq$ 105 electrical degrees.

15. The machine according to any one of claims 1-7, wherein:

the number of barriers per pole is n=2, the number of teeth per pole and phase is 2, 15 electrical degrees $\leq \alpha_0$ $\leq$ 27 electrical degrees, 18.5 electrical degrees $\leq \alpha_1 \leq$ 30.5 electrical degrees, 104 electrical degrees $\leq \alpha_n \leq$ 116 electrical degrees, or
the number of barriers per pole is n=3, the number of teeth per pole and phase is 3, 10.5 electrical degrees $\leq \alpha_0 \leq$ 22.5 electrical degrees, 10.5 electrical degrees $\leq \alpha_1 \leq$ 22.5 electrical degrees, 8 electrical degrees $\leq \alpha_2 \leq$ 20 electrical degrees, 97 electrical degrees $\leq \alpha_n \leq$ 109 electrical degrees, or
the number of barriers per pole is n=2, the number of teeth per pole and phase is 3, 29 electrical degrees $\leq \alpha_0$ $\leq$ 41 electrical degrees, 9 electrical degrees $\leq \alpha_1 \leq$ 21 electrical degrees, 108.5 electrical degrees $\leq \alpha_n \leq$ 120.5 electrical degrees, or
the number of barriers per pole is 2, the number of teeth per pole and phase is 2.5, 25.5 electrical degrees $\leq \alpha_0 \leq$ 37.5 electrical degrees, 11 electrical degrees $\leq \alpha_1 \leq$ 25 electrical degrees, 104.5 electrical degrees $\leq \alpha_n$ $\leq$ 116.5 electrical degrees, or
the number of barriers per pole is 2, the number of teeth per pole and phase is 1.5, 17 electrical degrees $\leq \alpha_0$ $\leq$ 29 electrical degrees, 24.5 electrical degrees $\leq \alpha_1 \leq$ 36.5 electrical degrees, 90 electrical degrees $\leq \alpha_n \leq$ 104 electrical degrees, or
the number of barriers per pole is 2, the number of teeth per pole and phase is 3.5, 24 electrical degrees $\leq \alpha_0$ $\leq$ 36 electrical degrees, 13 electrical degrees $\leq \alpha_1 \leq$ 25 electrical degrees, 106 electrical degrees $\leq \alpha_n \leq$ 118 electrical degrees, or
the number of barriers per pole is 2, the number of teeth per pole and phase is 4, 28.5 electrical degrees $\leq \alpha_0$ $\leq$ 40.5 electrical degrees, 14 electrical degrees $\leq \alpha_1 \leq$ 26 electrical degrees, 99 electrical degrees $\leq \alpha_n \leq$ 111 electrical degrees.

16. The machine according to any one of claims 1-15, wherein the magnetically permeable layers are connected via inner and/or peripheral links, wherein peripheral links separate peripheral ends of barriers from the gap.

17. The machine according to any one of claims 1-15, wherein the barriers reach the gap, and the angular distances between adjacent peripheral ends of the barriers are angular distances between midpoints of outer circumference arcs of the transverse projection of the rotor, the arcs separating circumferentially adjacent magnetically permeable layers.

18. The machine according to any one of claims 1-15, wherein peripheral ends of the barriers are separated from the gap by a peripheral link, and the angular distances between adjacent peripheral ends of the barriers are angular distances between midpoints of peripheral link sections of minimum thickness in radial direction.

19. The machine according to any one of claims 1-15, wherein peripheral ends of the barriers are separated from the gap by a peripheral link, and the angular distances between adjacent peripheral ends of the barriers are angular distances between midpoints of peripheral link sections having a thickness in radial direction which deviates from minimum link thickness in radial direction by no more than 5%.

20. The machine according to any one of claims 1-15, wherein peripheral ends of the barriers are separated from the gap by a peripheral link, and the angular distances between adjacent peripheral ends of the barriers are angular distances between midpoints of peripheral link sections having a thickness in radial direction which deviates from minimum link thickness in radial direction by no more than 20%.

21. The machine according to any one of claims 1-20, wherein at least one of the flux barriers comprises a permanent magnet or multiple permanent magnets.

22. The machine according to any one of claims 1-20, wherein at least one of the flux barriers comprises a squirrel cage.

23. The machine according to any one of claims 1-20, wherein at least one of the flux barriers comprises a squirrel cage and a permanent magnet or multiple permanent magnets.

**Fig. 1.**

**Fig.2**

**Fig.3**

**Fig.4**

**Fig.5**

**Fig.6**

**Fig.7**

Fig.8

Fig.9

**Fig.10**

Fig.11

**Fig.12**

**Fig.13**

**Fig.14**

**Fig.15**

**Fig.16**

16

16

14

**Fig.17**

Fig.18

**INTERNATIONAL SEARCH REPORT**

| International application No. |
| --- |
| PCT/RU 2018/050139 |

**A.    CLASSIFICATION OF SUBJECT MATTER**
H02K 19/06 (2006.01); H02K 1/24 (2006.01)

According to International Patent Classification (IPC) or to both national classification and IPC

**B.    FIELDS SEARCHED**

Minimum documentation searched (classification system followed by classification symbols)
H02K

Documentation searched other than minimum documentation to the extent that such documents are included in the fields searched

Electronic data base consulted during the international search (name of data base and, where practicable, search terms used)
PatSearch (RUPTO internal), USPTO, PAJ, Esp@cenet, DWPI, EAPATIS, PATENTSCOPE

**C.    DOCUMENTS CONSIDERED TO BE RELEVANT**

| Category* | Citation of document, with indication, where appropriate, of the relevant passages | Relevant to claim No. |
| --- | --- | --- |
| X | US 6239526 B1 (LG ELECTRONICS INC) 29.05.2001, col. 1, lines 6-10; col. 3, lines 45-52; fig. 6 | 1-3 |
| A | US 8638012 B2 (ABB RESEARCH LTD.) 28.01.2014 | 1-3 |
| A | US 5818140 A1 (VAGATI, ALFREDO) 06.10.1998 | 1-3 |

☐  Further documents are listed in the continuation of Box C.          ☐  See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 21 January 2019 (21.01.2019) | 31 January 2019 (31.01.2019) |

| Name and mailing address of the ISA/ RU | Authorized officer |
| --- | --- |
| Facsimile No. | Telephone No. |

Form PCT/ISA/210 (second sheet) (April 2005)

## INTERNATIONAL SEARCH REPORT

International application No.

**PCT/RU 2018/050139**

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☒ Claims Nos.: 4-23
   because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
☐ The additional search fees were accompanied by the applicant's protest and, where applicable, the payment of a protest fee.
☐ The additional search fees were accompanied by the applicant's protest but the applicable protest fee was not paid within the time limit specified in the invitation.
☐ No protest accompanied the payment of additional search fees.

Form PCT/ISA/210 (continuation of first sheet (2)) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5818140 A
- US 8638012 B
- US 6239526 B